**Europäisches Patentamt**

**European Patent Office**

**Office européen des brevets**

(11) Veröffentlichungsnummer: **0 141 910**
**A1**

(12) # EUROPÄISCHE PATENTANMELDUNG

(21) Anmeldenummer: **84108849.5**

(22) Anmeldetag: **02.06.83**

(51) Int. Cl.⁴: **A 22 C 11/02**

(30) Priorität: **25.06.82 DE 3223725**

(43) Veröffentlichungstag der Anmeldung: **22.05.85**
**Patentblatt 85/21**

(84) Benannte Vertragsstaaten: **AT BE CH DE FR GB IT LI NL SE**

(60) Veröffentlichungsnummer der früheren Anmeldung nach Art. 76 EPÜ: **0096378**

(71) Anmelder: **Kollross, Günter, Am Wallerstädter Weg 20, D-6080 Gross Gerau-Dornheim (DE)**

(72) Erfinder: **Kollross, Günter, Am Wallerstädter Weg 20, D-6080 Gross Gerau -Dornheim (DE)**
Erfinder: **Steinbis, Fritz Karl, Helwigstrasse 64, D-6080 Gross Gerau - Dornheim (DE)**

(74) Vertreter: **Beyer, Werner, Dipl.-Ing. et al, Staufenstrasse 36, II P.O. Box 174109, D-6000 Frankfurt/Main (DE)**

(54) **Wursthüllen-SchlauchmateriaL zur Verwendung insbesondere bei einem Verfahren zum automatisierten Herstellen von Würsten auf einer Wurstfüllmaschine.**

(57) Ein Wursthüllen-Schlauchmaterial (18) zur Verwendung insbesondere beim automatisierten Herstellen von Würsten im Strang auf einer Wurstfüllmaschine (10) dergestalt, dass es zunächst neben der Füllmaschine von einer Vorratsrolle (34) in grösseren Längen abschnittsweise abgezogen, axial zusammengerafft und abgetrennt wird und dann ein jeder solcher Abschnitt mit dem Brätausstoss der Füllmaschine (10) in Verbindung gebracht und unter gebremsten Abzug von einem Füllrohr (16¹) portionsweise mit Brät gefüllt, abgeteilt und verschlossen wird, wobei die Länge jedes gerafften Schlauchabschnitts (18) beim Abziehen von der Vorratsrolle (34) sowie ferner die Länge des vom Füllrohr (16¹) abgezogenen Schlauchmaterials beim Füllen an der Füllmaschine fortlaufend gemessen und letztere mit der zuvor beim Raffen gemessenen Abschnittslänge verglichen werden und das Füllen, Abteilen und Verschliessen in Abhängigkeit von diesem Vergleich unterbrochen wird, weist erfindungsgemäss für die Längenmessungen in regelmässigen Längsabständen maschinell lesbare Kennstellen auf. Dadurch wird die Messgenauigkeit erhöht, und Messfehler durch Längendehnung unter dem Druck des Bräts beim Füllen werden vermieden.

- 1 -

## Beschreibung

Die Erfindung bezieht sich auf Wursthüllen-Schlauchmaterial insbesondere zur Verwendung bei einem Verfahren zum automatisierten Herstellen von Würsten im Strang auf einer Wurstfüllmaschine, bei welchen das Schlauchmaterial zunächst neben der Füllmaschine von einer Vorratsrolle in größeren Längen abschnittsweise abgezogen, axial zusammengerafft und abgetrennt wird und dann ein jeder solcher Abschnitt mit dem Brätausstoß der Füllmaschine in Verbindung gebracht und unter gebremstem Abzug von einem Füllrohr portionsweise mit Brät gefüllt, abgeteilt und verschlossen wird.

Ein solches Verfahren ist aus der DE-OS 29 41 872 bekannt. Es hat gegenüber der herkömmlichen Methode des Bezugs fertig geraffter Schlauchabschnitte in Gestalt sogenannter "Schlauchraupen" von den Schlauchfabriken eine Reihe beträchtlicher Vorteile für den Wursthersteller:

- das in großen Längen auf Rollen aufgespulte Schlauchmaterial nimmt für die Lagerung beim Wursthersteller weitaus weniger Platz in Anspruch als fertig geraffte Schlauchraupen;

- das bis zur Anlieferung an den Wursthersteller ungewässert gebliebene Schlauchmaterial bietet eine weitaus höhere Garantie für Keimfreiheit und kann in trockenen Räumen auch über längere Zeitabschnitte ohne die Gefahr der Verseuchung mit Bakterien gelagert werden;

- das Wässern des Schlauchmaterials zum Erzielen des zum Raffen und Füllen erforderlichen Feuchtigkeitsgehalts geht bei ungerafftem Material viel schneller vonstatten als bei den nicht gerafften Schlauchraupen und läßt sich deshalb auch im Durchlauf vornehmen;

- es entfällt das praktisch nur von Hand durchführbare Entfernen der Verpackung der einzelnen Schlauchraupen in Schlauchhüllen oder -netzen;

- das Verbringen der erst unmittelbar vor dem Füllen gerafften Schlauchraupen vor dem Brätausstoß der Füllmaschine läßt sich mechanisieren, wodurch weitere Arbeitskraft gespart und die Gefahr der Beschädigung des Schlauchmaterials beim Bestücken der Füllrohre von Hand vermieden wird;

- da auch hierbei das Raffen mechanisch durchführbar ist, läßt sich das gesamte Raff-Füll-Verschließ-Verfahren automatisieren und rationalisieren.

Dennoch kann bei dem bekannten Verfahren noch nicht vollständig auf eine Hilfskraft verzichtet werden. Unvermeidbare Toleranzen in den Abmessungen und der Dehnbarkeit des Schlauchmaterials ebenso wie Toleranzen in den gerafften Abschnittslängen machen eine ständige Überwachung des Materialabzugs vom Füllrohr und das rechtzeitige Abschalten der Füllmaschine von Hand erforderlich, wenn nicht größere ungefüllte Restlängen an Schlauchmaterial zur Vermeidung der Gefahr einer Füllung "ins Leere" mit deren Nachteilen in Kauf genommen werden sollen.

In dem prioritätsgleichen Patent 32 23 725 wird deshalb zur Verbesserung des bekannten Verfahrens vorgeschlagen, die Länge jedes gerafften Schlauchabschnitts beim Abziehen von der Vorratsrolle sowie ferner die Länge des vom Füllrohr abgezogenen Schlauchmaterials beim Füllen an der Füllmaschine fortlaufend zu messen und letztere mit der zuvor beim Raffen gemessenen Abschnittslänge zu vergleichen und dann das Füllen, Abteilen und Verschließen in Abhängigkeit von diesem Vergleich zu unterbrechen. Es wird also das Ergebnis der Längenmessung beim Raffen ständig als Vergleichsgröße bei der späteren Verarbeitung der zuvor gemessenen Schlauchabschnitte auf der Füllmaschine herangezogen und dadurch eine größtmögliche Ausnützung des Schlauchmaterials mit einem Kleinstmaß an Abfall ermöglicht.

Die hierzu erforderlichen Längenmessungen können mit herkömmlichen Verfahren unter Verwendung von Tastrollen durchgeführt werden, unter denen das Material hindurchläuft. Dabei ist jedoch, insbesondere bei geöltem Schlauchmaterial, ein Restschlupf, der das Ergebnis verfälscht praktisch nicht zu vermeiden, und ferner muß, um Verfälschungen beim Vergleich der gemessenen Längen durch Materialdehnung auszuschließen, die Messung der vom Füllrohr abgezogenen Schlauchlängen vor der Bremsstelle erfolgen, wo das Material noch nicht dem Innendruck durch das eingefüllte Wurstbrät unterworfen ist.

Im prioritätsgleichen Patent wird deshalb alternativ zur herkömmlichen Längenmessung mit Tastrollen auch Schutz für eine Ausbildung des eingangs genannten Verfahrens dergestalt beansprucht, daß die Länge der Schlauchabschnitte beim Abziehen von der Vorratsrolle und die Länge des vom Füllrohr abgezogenen Schlauchmaterials durch maschinelles Zählen von in regelmäßigen Längsabständen am Schlauchmaterial angeordneten Materialkennstellen gemessen werden.

Aufgabe der vorliegenden Erfindung ist es demgegenüber, ein Wursthüllen-Schlauchmaterial zur Verwendung insbesondere bei einem Verfahren der eingangs genannten Art zu schaffen, welches eine schlupffreie Längenmessung ohne Verfälschungen durch die Materialdehnung vor allem beim Füllen unter dem Innendruck durch das eingefüllte Wurtbrät mit Sicherheit vermeidet.

0141910

Erfindungsgemäß wird diese Aufgabe dadurch gelöst, daß das Schlauchmaterial für die Längenmessung in regelmäßigen Längsabständen maschinelle lesbare Kennstellen aufweist.

In einfacher Ausführung können derartige Materialkennstellen aus einer Längsreihe auf das Schlauchmaterial aufgedruckter Markierungspunkte oder Markierungsstriche bestehen, die von Photozellen erfaßt und von einer an die jeweilige Photozelle angeschlossenen Zähleinrichtung gezählt werden. Der auf dem Schlauchmaterial angeordnete "Maßstab", der aus einer Maßeinteilung ohne Bezugspunkt und Längenangaben besteht, weil es für die Erfindung nur auf das Zählen der Maßeinheiten ankommt, könnte auch durch Materialkennstellen gebildet sein, die sich, wie beispielsweise kleine Erhebungen, mechanisch abtasten lassen.

In einer weiteren Ausführungsvariante können die Materialkennstellen durch Auftragen unter Einschluß eines eine metallische Komponente enthaltenden Materials auf bzw. in das Schlauchmaterial gebildet sein, die durch magnetische oder elektrische Sensoren erkannt werden.

Grundsätzlich kommt es nur darauf an, daß die die Maßteilung bildenden Kennstellen auf dem Schlauchmaterial zur Natur des verwendeten Sensors passen und während des Vorbeilaufs am Sensor gezählt werden. Auf diese Weise ist ein berührungsloses Messen der Schlauchlängenabschnitte möglich.

Es versteht sich, daß auch eine sich kontinuierlich schraubenförmig um das Schlauchmaterial windende Materialkennstelle beispielsweise in Gestalt eines Farbauftrags für die beschriebenen Maßzwecke in Betracht kommt, weil die Schraubenlinie, in Längsrichtung gesehen, ebenso in der Lage ist, Kennstellen zu erzeugen. Ihr Wiederholabstand kann beispielsweise 1 cm oder auch einige Zentimeter betragen und sollte zweckmäßigerweise höchstens so groß sein, wie die kleinste

0141910

bestimmungsgemäß mit dem Schlauchmaterial herzustellende Wurstlänge beträgt.

Es spielt grundsätzlich keine Rolle, wann die erfindungsgemäß
vorgeschlagene Längenmarkierung an oder auf dem Schlauchmaterial
angebracht wird. Wenn zu befürchten ist, daß auf der Außenseite
des Schlauchmaterials anzubringende Materialkennstellen beschädigt und dadurch die Messungen gestört werden, besteht die
Möglichkeit, Aufdrucke oder sonstige Markierungen an der Innenseite oder bei aus ebenen Folien gebildeten Schläuchen in einer
Längsnaht des Schlauchmaterials zwischen den einander überlappenden Materialschichten anzubringen.

Da die mit einer Maßeinteilung auf dem Schlauchmaterial arbeitende Meßeinrichtung für die Längenmessung die Zahl der
Materialkennstellen zählt, ist es unerheblich, ob das Schlauchmaterial an der Meßstelle gedehnt wird oder nicht. Es besteht
daher mit dem erfindungsgemäßen Schlauchmaterial eine größere
Freiheit in der Wahl der Anbringung der Sensoren für die
Kennstellen. Insbesondere läßt sich die Meßeinrichtung für
das beim Füllen abgezogene Schlauchmaterial ohne Verfälschung
des Meßergebnisses dadurch realisieren, daß der entsprechende
Sensor, in Abzugsrichtung des Schlauchmaterials betrachtet,
hinter der Darmbremse angeordnet wird.

Die Erfindung wird nachstehend anhand der Zeichnung näher erläutert. Es zeigen:

Fig. 1          eine Anordnung zur Durchführung des eingangs
                erwähnten Verfahrens unter Verwendung von
                erfindungsgemäßem Schlauchmaterial,

Fig. 2a und b   in schematischer Darstellung eine erste
                Ausbildung des Schlauchmaterials mit quadra-
                tisch-punktförmigen aufgedruckten Kenn-
                stellen, die von einem optischen Sensor wie
                einer Photozelle abgetastet werden, in

0141910

in Seitenansicht bzw. im Querschnitt,

**Fig. 3a und b**      ähnliche Ansichten wie in Fig. 2 mit einem Schlauchmaterial, auf welchem Striche als Kennstellen angebracht sind, die gleichfalls optisch abgetastet werden,

**Fig. 4a und b**      noch eine weitere Ausführungsform mit optischer Abtastung eines sich kontinuierlich schraubenförmig um das Schlauchmaterial windenden Farbauftrags, der für eine bestimmte Abtastzone am Schlauchumfang regelmäßig wiederkehrende Materialkennstellen bildet,

**Fig. 5a und b**      die Seitenansicht bzw. den Querschnitt eines Schlauchmaterials mit Materialkennstellen, die von kleinen Erhebungen gebildet sind, welche mechanisch mittels einer durch die Erhebungen ausgelenkten Tastrolle abgetastet werden,

**Fig. 6a und b**      eine Seitenansicht bzw. einen Querschnitt durch ein aus einer ursprüngliche ebenen Folienbahn hergestelltes Schlauchmaterial, bei welchem die Kennstellen innerhalb der dadurch gebildeten Naht- oder Klebestelle angeordnet und von eingeschlossenen Metallpunkten gebildet sind, die von einem magnetischen oder elektrischen Sensor erkannt werden.

0141910

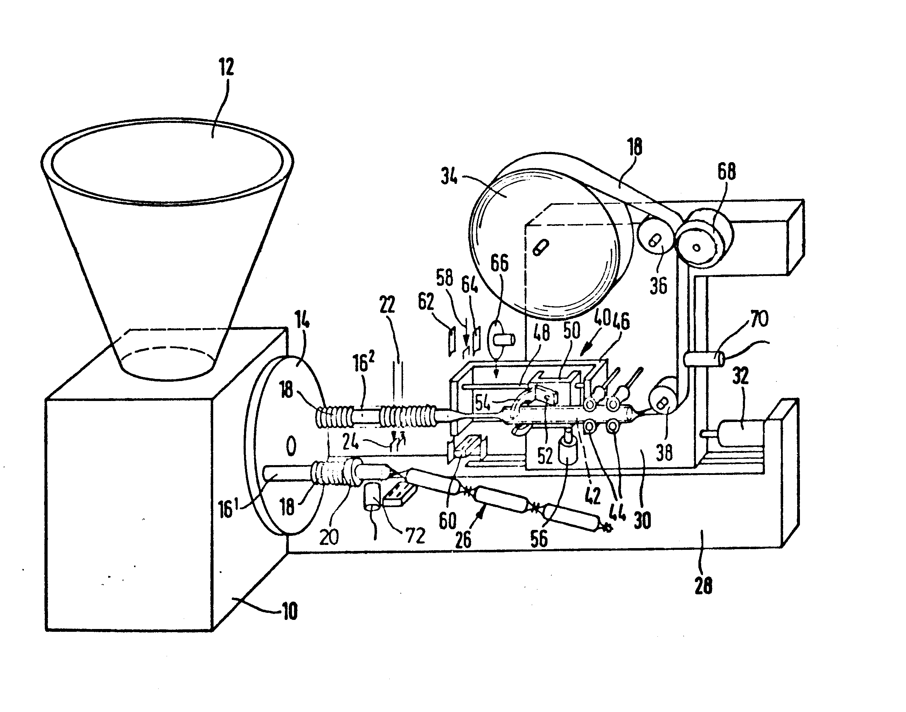

In Fig. 1 ist mit 10 eine Wurstfüllmaschine bezeichnet. Ein
Fülltrichter 12 auf der Maschine dient in bekannter Weise
zum Einfüllen der Fleischmassen, die in der Maschine zu Wurstbrät zerkleinert werden. Seitlich an der Maschine 1o ist eine
Revolverscheide 14 mit zwei zueinander parallelen und identisch
ausgebildeten Füllrohren $16^1$, $16^2$ angeordnet, die durch Drehen
der Scheibe um jeweils 180° mittels eines (nicht gezeigten)
Schaltantriebs abwechselnd vor den nicht sichtbaren Brätausstoß der Füllmaschine 1o gebracht werden können. In der
Zeichnung befindet sich das vordere Füllrohr $16^1$ in Füllstellung vor dem Brätausstoß, während das hintere Füllrohr $16^2$ die
sogenannte Ladestellung einnimmt.

In der Ladestellung wird das Füllrohr $16^2$ in nachstehend beschriebener Weise mit Wursthülle in Gestalt von axial zusammengerafftem Kunstdarm-Schlauchmaterial 18 "geladen", in
welches in der Füllstellung das Wurstbrät durch das Füllrohr
$16^1$ unter Abziehen des darauf vorhandenen Schlauchmaterials
eingefüllt wird. Eine Darmbremse 2o, die das Ende des Füllrohrs $16^1$ elastisch übergreift, bremst das Abziehen des
Schlauchmaterials und stelle dadurch sicher, daß dieses parallel mit Wurstbrät gefüllt wird.

Vor dem offenen Ende des Füllrohrs $16^1$ ist eine schematisch
bei 22 angedeutete Klammersetzeinrichtung zum paarweisen
Setzen von metallischen Verschlußklammern 24 angeordnet,
mittels welcher der durch das Füllen entstehende Wurststrang
26 in kettenförmig aneinander gereihte Würste unterteilt und
zwischen den Würsten verschlossen wird. Ist das auf dem vorderen Füllrohr $16^1$ vorhandene Schlauchmaterial verbraucht, wird
die Darmbremse 2o in eine das Füllrohr freigebende Stellung
bewegt, und die Revolverscheibe 14 wird um 180° weitergeschaltet, um das inzwischen "geladene" zweite Füllrohr $16^2$ vor
den Brätausstoß der Maschine zu bringen. Nach Zurückschieben
der Darmbremse 2o auf das Ende dieses Füllrohrs beginnt der
Füllvorgang in vorbeschriebener Weise von neuem, bis auch das
darauf vorhandene Schlauchmaterial verbraucht ist, während in-

0141910

zwischen das in Ladestellung befindliche andere Füllrohr erneut
mit Schlauchmaterial geladen wird.

Zum Laden des jeweils in Ladestellung befindlichen Füllrohrs
dient die nachstehend beschriebene Einrichtung:

Auf einem an die Füllmaschine 1o anschließenden langgestreckten Führungsbett 28 ist ein Schlittengehäuse 3o parallel zu den
Füllrohren 16 verschieblich geführt und kann von einem doppeltwirkenden Kraftzylinder 32 hydraulisch oder pneumatisch zwischen einer - in der Zeichnung links liegenden - vorgeschobenen
Stellung und einer - in der Zeichnung rechts liegenden - zurückgezogenen Stellung verschoben werden. Das Schlittengehäuse
3o trägt in einer lösbaren Halterung eine Vorratsspule 34 mit
flach aufgewickeltem Kunstdarm - Schlauchmaterial 18, das über
Umlenkrollen 36, 38 einer in ihrer Gesamtheit mit 4o bezeichneten Raffeinrichtung koaxial zu dem in Ladestellung befindlichen Füllrohr 16 zugeführt wird. Der Raffeinrichtung ist ein
schwimmend gelagertes Rohrstück 42 von gleichem Durchmesser wie
die Füllrohre $16^1$, $16^2$ zugeordnet, das zwischen zwei Paaren von
Führungsrollen 44 in koaxialer Ausrichtung zu dem in Ladestellung befindlichen Füllrohr $16^2$ geführt ist. Das von der Vorratsspule 34 flach über die Umlenkrollen 36, 38 verlaufende
Schlauchmaterial 18 wird von dem Rohrstück 42 auf seinen runden Querschnitt geöffnet und vermag dank der freien Drehbarkeit der Führungsrollen 44 zwischen diesen und dem Rohrstück
42 ungehindert hindurchzulaufen.

Die Raffeinrichtung 4o besteht aus einem an dem Schlittengehäuse 3o befestigten U-förmigen Tragrahmen 46, zwischen dessen Schenkeln zwei parallele Führungsstangen 48 angeordnet
sind. Auf die Führungsstangen 48 ist ein U-förmiger Schlitten
5o parallel zu dem Rohrstück 42 verschieblich geführt. Der
Schlitten 5o lagert übereinander zwei Wellen 52, an denen an
der Vorderseite des Schlittens je ein Greiferhebel mit einer
halbringförmigen Greiferbacke 54 befestigt ist. Die beiden Greiferbacken 54 bilden gleichsam eine Zange, die durch gegenläufiges Verdrehen der Wellen geöffnet bzw. geschlossen werden kann. Der Schlitten 5o ist mit einem (nicht gezeigten) Antrieb zum Hin- und Herverschieben auf den Führungsstangen 48 versehen. Ferner befindet sich auf der Rückseite des Schlittens 5o ein (gleichfalls nicht gezeigter) Antrieb für die Greiferbackenwellen, mit welchem eine solche Bewegung der Greiferbacken von der Schlittenbewegung ableitbar ist, daß diese in der rechten Endstellung des Schlittens 5o schließen, während der Verschiebebewegung des Schlittens nach links geschlossen bleiben, in der linken Endstellung öffnen und in geöffnetem Zustand mit dem Schlitten zurückfahren, um dann erneut zu schließen.

Das Innere der Greiferbacken 54 ist mit Reibbelägen versehen, die dem Außendurchmesser des Rohrstücks 42 angepaßt sind, so daß die Greiferbacken 54 in geschlossenem Zustand das über das Rohrstück 42 verlaufende Schlauchmaterial 18 reibschlüssig erfassen, während sie im geöffneten Zustand frei über das Schlauchmaterial hinweggeführt werden können.

Am Schlittengehäuse 3o ist ferner eine Klemmeinrichtung 56 angebracht, mit welcher das Schlauchmaterial 18 gegen das Rohrstück 42 festgeklemmt werden kann, um das Schlauchmaterial 18 und das Rohrstück 42 am Schlittengehäuse 3o festzulegen. Die Klemmeinrichtung 56 kann ein pneumatischer oder hydraulischer Kraftzylinder oder ein Elektromagnet sein, dessen bewegliches Glied einen das Schlauchmaterial beim Betätigen erfassenden Reibbelag trägt.

Der Verschiebeweg des Schlittens 5o auf dem Führungsbett 28 ist so bemessen, daß das Rohrstück 42 in der vorgeschobenen Stellung gegen das in der Ladestellung befindliche Füllrohr 16 bündig anliegt und in der zurückgezogenen Stellung einen größeren Abstand von beispielsweise 1oo bis 15o mm zum Füllrohr 16 einnimmt. In diesem Abstandsbereich sind am Führungsbett 28 oberhalb bzw. unterhalb der Bahn des Rohrstücks 42 eine Klammersetzvorrichtung mit einem nur als Pfeil angedeuteten Treiber 58, einer Matrize 6o  sowie zwei Paaren von
Scherenbacken 62, 64 und ferner eine Trenneinrichtung beispiels
weise in Gestalt eines drehend antreibbaren Schneidmessers 66
befestigt, das im unbetätigten Zustand soweit von der Bahn des
Rohrstücks 42 zurückgezogen ist, daß das Schlittengehäuse 3o
mit dem geklemmten Rohrstück 42 unbehindert gegen das Füllrohr
16 und die Greiferbacken 54 längs dem Rohrstück 42 und dem Füll·
rohr 16 hin und her bewegt werden können.

Am Schlittengehäuse 3o ist gegenüber der Umlenkrolle 36 eine
gegen das darübergeführte Schlauchmaterial unter Federkraft
anstellbare Gegenrolle 68 gelagert. Ferner befindet sich am
Schlittengehäuse 3o zwischen den Umlenkrollen 36 und 38 ein
Sensor 7o beispielsweise in Gestalt einer Photozelle, mit
welchem das vorbeilaufende Schlauchmaterial 18 auf daran in
später erläuterter Weise angebrachte Kennstellen abgetastet
wird.

Ein weiterer Sensor 72 ist an dem in Füllstellung befindlichen
Raffrohr $16^1$ außerhalb der Darmbremse 2o angeordnet, um ein
Messen der Abzugslänge des Schlauchmaterials vom Füllrohr $16^1$
mit Hilfe der erwähnten Kennstellen am Schlauchmaterial zu ermöglichen.

Die Kennstellen, mit denen erfindungsgemäß das Schlauchmaterial
in regelmäßigen Längsabständen versehen ist können ebenso wie
die Sensoren 7o, 72 zu ihrer maschinellen Ablesung verschieden
ausgebildet sein.

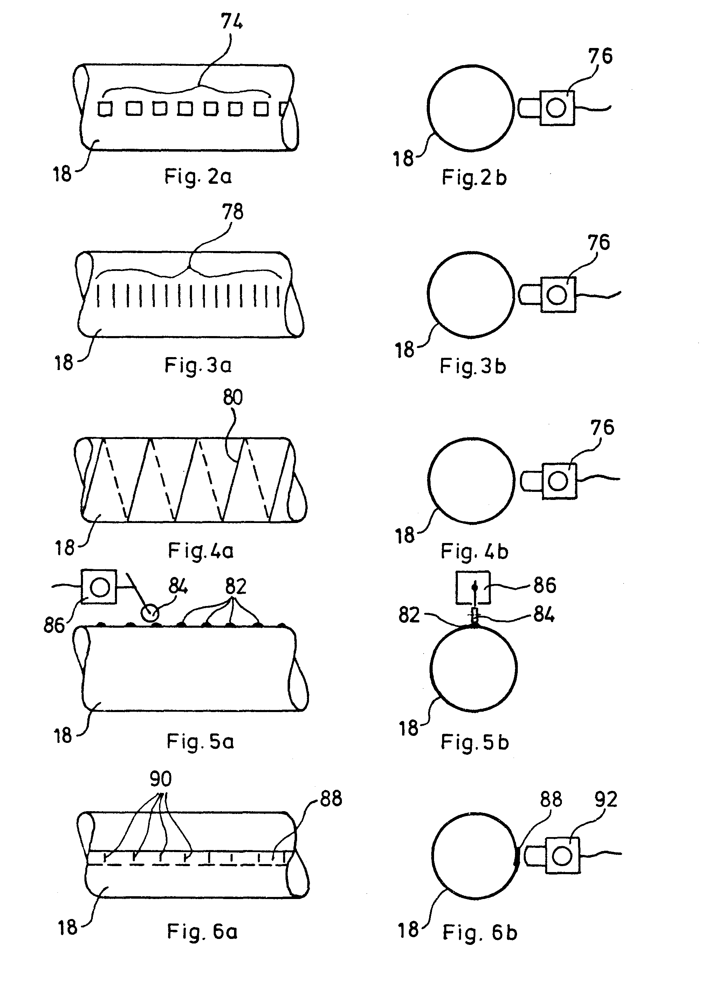

Die Figuren 2a und 2b zeigen in einer ersten, besonders einfachen Ausführung rechteckige Markierungspunkte 74, die in
einer Längsreihe in regelmäßigen Abständen auf das Schlauchmaterial 18 aufgedruckt sind und von einem Sensor in Gestalt
einer Photozelle 76 erfaßt werden können, welche die dabei
entstehenden Impulse einer (nicht gezeigten) elektronischen
Zähleinrichtung zum Zählen zuführt.

Die in den Figuren 3a und 3b gezeigte Ausführungform unterscheidet sich von der nach den Figuren 2a und 2b nur dadurch, daß anstelle der Markierungspunkte 74 Markierungsstriche 78 aufgedruckt sind, die in gleicher Weise von einer Photozelle 76 als Sensor erfaßbar sind.

Die Figuren 4a und 4b zeigen eine gleichfalls mit einer Photozelle 76 zusammenwirkende Ausführungsform, bei welcher die Kennstellen von einem sich schraubenförmig um das Schlauchmaterial 18 windenden Farbauftrag 80 gebildet sind. Auch hiermit ist eine Längenmessung durch Impulszählung möglich, da sich die Schraubenlinie gegenüber der Photozelle 76, in Längsrichtung des Schlauchmaterials am Standort der Photozelle 76 betrachtet, als Reihe von mit gleichen Abständen aufeinander folgenden Kennstellen darstellt.

Die Figuren 5a und 5b zeigen demgegenüber ein Schlauchmaterial 18 mit in Längsrichtung beabstandet aufeinanderfolgenden kleinen Erhebungen 82, die mechanisch mittels einer davon auslenkbaren Tastrolle 84 an einem Meßwandler 86 abgetastet werden. Der Meßwandler 86 wandelt die mechanischen Auslenkungen in bekannter Weise in elektrische Impulse um, die wiederum von einer elektronischen  Zähleinrichtung gezählt werden können.

In einer weiteren Ausführungsform können die Kennstellen auch durch Auftrag oder Einschluß eines eine metallische Komponente enthaltenden Materials auf bzw. in das Schlauchmaterial gebildet sein, das dann von einem magnetischen oder elektrischen Sensor abgetastet wird. Die Figuren 6a und 6b zeigen hierfür ein Ausführungsbeispiel in Verbindung mit einem aus einer flachen Folienbahn durch überlappendes Verbinden der beiden Längskanten hergestelltes Schlauchmaterial 18', das in dem dadurch entstehenden Überlappungsbereich 88 in regelmäßigen Längsabständen eingeschlossene Metallpunkte 90 enthält, die von einem elektrischen oder magnetischen Sensor 92 erkannt und in elektrische Impulse an eine elektronische Zähleinrichtung weitergegeben werden können. Es versteht sich von selbst, daß solche metallischen Einschlüsse nur insoweit verwendbar sind, als ihre Art und Größe mit den lebensmittelrechtlichen Vorschriften vereinbar ist oder sichergestellt ist, daß die von dem Schlauchmaterial gebildete Wursthülle vor dem Verzehr von der Wurst entfernt wird.

Zum Ein- und Ausschalten der Wurstfüllmaschine 1o, zum Schalten der Revolverscheibe 14, zum Steuern des Antriebszylinders der Raffvorrichtung 4o und zum Steuern der Klammersetzvorrichtungen 22 und 58 bis 64 sind (nicht gezeigte) elektrische betätigbare Steuermittel sowie (ebenfalls nicht gezeigte) Verriegelungsmittel vorgesehen, welch letztere dafür sorgen, daß die jeweilige Betätigung nur dann erfolgen kann, wenn der vorhergehende Betätigungsschritt beendet ist und die zu betätigende Vorrichtung betätigungsbereit ist.

Der gesamte Programmablauf der gezeigten Anordnung wird von einem (nicht gezeigten) Kleinrechner gesteuert und koordiniert, der in gewohnter Weise einen Mikroprozessor sowie programmierbare Nur-Lesespeicher (PROM) und Speicher mit wahlweisen Zugriff (RAM) neben sonstigen üblichen Komponenten eines Kleinrechners sowie Zählkreise enthält, an welche die beiden Sensoren 7o und 72 angeschlossen sind.

Die Wirkungsweise der gezeigten Anordnung unter der Kontrolle des Kleinrechners ist folgende:

Es sei angenommen, daß die Revolverscheibe 14 mit einem leeren Führungsrohr vor der Raffvorrichtung 4o steht, das Schlittengehäuse 3o die in der Zeichnung rechte Endstelle eingenommen hat, d.h. der Kraftzylinder 32 eingefahren ist, der Schlitten 5o gleichfalls seine rechte Endstellung eingenommen hat und das von der Vorratsrolle 34 kommende Schlauchmaterial über die Umlenkrollen 36, 38 und zwischen den Führungsrollen 44 hindurch auf das Rohrstück 42 aufgezogen ist, welches seinerseits durch die Klemmeinrichtung 56 am Schlittengehäuse 3o festgelegt ist. Desweiteren sei angenommen, daß sich auf dem anderen Füllrohr, welches sich vor dem Brätausstoß der Wurstfüllmaschine 1o befindet, ein geraffter Schlauchhüllenabschnitt 18 in Gestalt einer Schlauchraupe befindet, deren über die Füllrohrmündung überstehendes Ende mit einer Verschlußklammer verschlossen ist, und daß die Darmbremse 2o auf das vordere Ende dieses Füllrohrs aufgeschoben sind und der Sensor 72 gegen das Füllrohr 16[1] mit dem darüber ablaufenden Schlauchabschnitt in Stellung gebracht wird.

Wenn nun von dieser Ausgangsstellung aus die Anordnung in Betrieb gesetzt wird bzw. deren Betrieb fortgesetzt wird, gibt der Mikrocomputer zunächst den Befehl für das Steuerventil des Kraftzylinders 32, das Schlittengehäuse 3o mit der Raffvorrichtung 4o nach links zu verfahren, bis das Rohrstück 42 stirnseitig in Anlage gegen das hintere Füllrohr anliegt. Daraufhin werden durch entsprechende Computerbefehle die Klemmeinrichtung 56 gelöst und die Raffvorrichtung 4o eingeschaltet mit der Folge, daß die hin- und hergehenden und sich dabei schließenden und wieder öffnenden Greiferbacken 54 Schlauchmaterial 18 von der Vorratsrolle 34 abziehen und in Umfangsfalten axial auf dem hinteren Füllrohr zusammenschieben.

Gleichzeitig mit dem Beginn des Raffvorgangs zählt ein an den Sensor 72 angeschlossenes Zählwerk im Mikrocomputer die Zählimpulse des Sensors 7o und vergleicht die daraus errechnete Meterzahl des von der Vorratsrolle 34 abgezogenen Schlauchmaterials mit einer programmierten Soll-Länge für das zu einer Raupe auf dem Füllrohr zusammenzuraffende Material.

Mit dem Beginn des Raffens auf dem hinteren Füllrohr 16[2] wird die Füllmaschine 1o eingeschaltet und füllt protionsweise Wurstbrät durch das vordere Füllrohr 16[1] in das dabei von diesem abgezogene Schlauchmaterial. Jedesmal wenn eine vorgegebene Füllmenge erreicht ist, wird dieser Füllvorgang unterbrochen, und es werden der gefüllte Wurststrang durch Einschnüren mit geeigneten Einschnürwerkzeugen abgeteilt und zwei Verschluß-

0141910

klammern 24 gesetzt, woraufhin die Füllmaschine 1o erneut
eingeschaltet wird. Die Länge des hierbei von dem vorderen
Füllrohr abgezogenen Schlauchmaterials 18 wird ständig von dem
Sensor 72 erfaßt und dort mit dem Längenmeßergebnis verglichen,
das zuvor für diesen Schlauchabschnitt, als er gerafft wurde,
von dem Sensor 7o gemessen worden ist.

Außer der fortgesetzten Längenmessung des vom vorderen Füllrohr
abgezogenen Schlauchmaterials erfaßt der Mikrocomputer in Verbindung mit entweder den Einschaltungen der Füllmaschine 1o oder
den Auslösungen der Kalmmersetzvorrichtungen 58 bis 64 die
Menge an Schlauchmaterial, die für je eine gefüllte Wurst vom
vorderen Füllrohr abgezogen wird. Aufgrund dieser Messung errechnet der Mikroprozessor fortwährend die noch zur Verfügung
stehende Restlänge an Schlauchmaterial auf dem vorderen Füllrohr und sorgt, je nachdem wie der Mikrocomputer programmiert
ist, dafür, daß entweder das Füllen, Abteilen und Verschließen
beendet wird, wenn nicht mehr genügend Schlauchmaterial auf dem
vorderen Füllrohr für eine weitere Wurstlänge vorhanden ist,
oder aber der Füllvorgang vorzeitig beendet und und ein letztes
Mal die Klammersetzeinrichtung 58 bis 64 betätigt wird. Auf
diese Weise wird verhindert, daß eine "Füllung ins Leere" erfolgt und gleichzeitig wird der auf dem vorderen Füllrohr enthaltene Schlauchvorrat bestmöglich ausgenutzt.

Wenn der Raffvorgang nach dem Raffen der vorbestimmten Schlauchmateriallänge beendet ist und die Klammersetzeinrichtung 22 zum
letzten Mal den Wurststrang abgeteilt und zwei Verschlußklammern
24 gesetzt hat, ohne daß die Füllmaschine 1o erneut wieder eingeschaltet wird, wird die Klemmeinrichtung 56 betätigt und
klemmt das Rohrstück 42 über das Schlauchmaterial 18 am Schlittengehäuse fest. Hieraufhin wird der Kraftzylinder 32 eingefahren und verschiebt das Schlittengehäuse 3o nach rechts, so
daß zwischen dem hinteren Füllrohr $16^2$ und dem Rohrstück 42
genügend freier Abstand entsteht, um die Einschnürbacken 62, 64
aufeinander zuzubewegen, eine Klammer mit Hilfe der Klammersetzeinrichtung 58, 6o zu setzen und den somit verschlossenen gerafften Materialabschnitt mit Hilfe des Schneidmessers 66 von dem auf dem Rohrstück 42 befindlichen ungerafften Material abzuschneiden.

Gleichzeitig wird die Darmbremse 2o mit dem Sensor 72 vom vorderen Füllrohr wegbewegt, so daß auch dieses zum nachträglichen Verschwenken der Füllrohre durch Drehen der Revolverscheibe 14 um 180° frei ist. Nach dem Drehen der Revolverscheibe befindet sich die Anordnung erneut in der obigen Ausgangsstellung, in welcher die Einschnürbacken 62, 64, die Klammersetzeinrichtung 58, 6o und das Schneidmesser 66 ebenfalls ihre Ausgangsstellungen eingenommen haben.

Während des Raffens wird die von der Vorratsrolle 34 abgezogene Schlauchlänge ständig von dem Meßwertumformer 72 erfaßt und im Kleinrechner derart verarbeitet, daß bei Erreichen eines geradzahligen Vielfachen der für eine einzelne Wurstfüllung erforderliche Schlauchlänge, die einer programmierten Anzahl von Würsten entspricht, der Raffvorgang abgeschaltet wird. Indem diese Messung bei jedem Raffvorgang wiederholt wird, werden Änderungen der für jede Wurst benötigten Schlauchlängen, die einmal auf unterschiedlicher Dehnbarkeit des Wursthüllenmaterials und zum anderen auf unterschiedlichen Kaliberquerschnitten beruhen können, fortlaufend erfaßt und im Wege einer Rückkopplung beim Raffen verwertet. Da derartige Änderungen im allgemeinen nicht sprunghaft auftreten, läßt sich auf diesem Wege eine praktisch vollständige Ausnutzung des Schlauchmaterials zur Herstellung von Würsten erzielen.

Wenn der Füllvorgang beendet ist und hieraufhin die Darmbremse 2o und der Rückhalterichtung 86 das vordere Füllrohr freigegeben haben, wird aufgrund einer besonderen Ausbildung des Schaltantriebs für die Revolverscheibe 14 diese zunächst nur um 9o° weitergeschaltet und in dieser Stellun der die Klebestelle enthaltende Schlauchabschnitt mit Hilfe einer nicht gezeigten Abstreifvorrichtung von dem Füllrohr abgestreift. Sobald das geschehen ist, wird die Revolverscheibe 14 erneut

0141910

betätigt und dadurch wieder ein leeres Füllrohr vor die Raffeinrichtung gebracht. Während nun erneut Schlauchmaterial auf
dieses Rohr gerafft wird, muß an dem anderen Füllrohr, welches
gleichfalls leer ist, der Füllvorgang für einen Zyklus unterbrochen werden.

Die Steuerung der einzelnen Vorgänge mit Hilfe des Kleinrechners ist eine reine Frage der Programmierung,das mit Hilfe
fachmännischen Könnens ohne weiteres gelöst werden kann.

0141910

Patentansprüche

1. Wursthüllen-Schlauchmaterial zur Verwendung insbesondere bei einem Verfahren zum automatisierten Herstellen von Würsten im Strang auf einer Wurstfüllmaschine (1o), bei welchem das Schlauchmaterial (18) zunächst neben der Füllmaschine von einer Vorratsrolle (34) in größeren Längen abschnittsweise abgezogen, axial zusammengerafft und abgetrennt wird und dann ein jeder solcher Abschnitt mit dem Brätausstoß der Füllmaschine (1o) in Verbindung gebracht und unter gebremstem Abzug von einem Füllrohr ($16^1$) portionsweise mit Brät gefüllt, abgeteilt und verschlossen wird, wobei die Länge jedes gerafften Schlauchabschnitts (18) beim Abziehen von der Vorratsrolle (34) sowie ferner die Länge des vom Füllrohr ($16^1$) abgezogenen Schlauchmaterials (18) beim Füllen an der Füllmaschine (1o) fortlaufend gemessen und letztere mit der zuvor beim Raffen gemessenen Abschnittslänge verglichen werden und das Füllen, Abteilen und Verschließen in Abhängigkeit von diesem Vergleich unterbrochen wird, d a d u r c h   g e k e n n - z e i c h n e t , daß das Schlauchmaterial (18) für die Längenmessungen in regelmäßigen Längsabständen maschinell lesbare Kennstellen (74, 78, 8o, 8o, 9o) aufweist.

2. Schlauchmaterial nach Anspruch 1, d a d u r c h   g e - k e n n z e i c h n e t, daß die Materialkennstellen (74, 78, 8o, 82, 9o) einen Wiederholungsabstand haben, der höchstens so groß ist wie die kleinste mit dem Schlauchmaterial (18) herzustellende Wurstlänge.

3. Schlauchmaterial nach Anspruch 1 oder 2, d a d u r c h   g e k e n n z e i c h n e t , daß die Kennstellen als optisch abtastbare Farbpunkte (74) oder Farbstriche (78) aufgedruckt sind.

0141910

4. Schlauchmaterial nach Anspruch 1 oder 2, d a d u r c h   g e -
k e n n z e i c h n e t , daß die Kennstellen von in regelmäßigen Abständen aufeinanderfolgenden Erhebungen (82) gebildet sind, welche mechanisch abtastbar sind.

5. Schlauchmaterial nach Anspruch 3 oder 4, d a d u r c h
g e k e n n z e i c h n e t , daß die Kennstellen Teile
einer sich um das Schlauchmaterial (18) windenden durchgehenden Schraubenlinie (8o) sind.

6. Schlauchmaterial nach Anspruch 1 oder 2, d a d u r c h
g e k e n n z e i c h n e t , daß die Kennstellen von eine
metallische Komponente enthaltenden Aufträgen oder Einschlüssen (9o) auf bzw. in dem Schlauchmaterial (18') gebildet sind, welche elektrisch oder magnetisch erkennbar
sind.

7. Schlauchmaterial nach Anspruch 6, welches aus einer ursprünglich flachen Folienbahn durch überlappende Verbindung der
beiden Folienränder hergestellt ist, d a d u r c h   g e -
k e n n z e i c h n e t , daß die Einschlüsse (9o) im Überlappungsbereich (88) zwischen den Folienrändern angeordnet
sind.

0141910

74

18   Fig. 2a

76

18   Fig. 2b

78

18   Fig. 3a

76

18   Fig. 3b

80

18   Fig. 4a

76

18   Fig. 4b

84   82

86

18   Fig. 5a

86

82   84

18   Fig. 5b

90   88

18   Fig. 6a

88   92

18   Fig. 6b

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 025 923 (KOLLROSS) * Seite 6, Zeile 13 - Seite 7, Zeile 12; Figur 1 * & DE - A - 2 941 872 (Kat. D) | 1 | A 22 C 11/02 |
| A | DE-B-1 187 947 (TILSTON) * Spalte 4, Zeilen 40-51; Figur 3 * | 1 | |
| A | DE-A-2 249 070 (SCHNELL) * Insgesamt * | 1 | |
| A | FR-A-2 343 427 (HANDTMANN) * Seite 12, Zeile 18 - Seite 13, Zeile 22; Figur 14 * | 1 | |
| A | US-A-3 055 246 (STEINBERG) * Spalte 2, Zeilen 43-66; Spalte 6, Zeile 56 - Spalte 7, Zeile 50 * | 1-3 | RECHERCHIERTE SACHGEBIETE (Int. Cl.4) A 22 C |
| A | NL-A-7 900 232 (INTERNATIONAL CHEMICAL ENGINEERING ESTABLISHMENT) * Seite 5, Zeilen 13-28 * | 1 | |
| A | EP-A-0 013 552 (HANDTMANN) | | |

Der vorliegende Recherchenbericht wurde für alle Patentansprüche erstellt.

| Recherchenort DEN HAAG | Abschlußdatum der Recherche 06-12-1984 | Prüfer DE LAMEILLIEURE D. |
|---|---|---|